# EUROPÄISCHE PATENTSCHRIFT

(11) **EP 0 952 768 B1**
(45) Veröffentlichungstag und Bekanntmachung des Hinweises auf die Patenterteilung: **09.10.2002**
(21) Anmeldenummer: 97951207.6
(22) Anmeldetag: 14.11.1997
(51) Int. Cl.: A01K 91/00, A01K 91/18, D01F 6/60, D01F 6/80, D01F 6/90

(54) **LANGLEINEN**
LONG LINES
LIGNES DE MER

(30) Priorität: 22.11.1996 DE 19648436
(43) Veröffentlichungstag der Anmeldung: 03.11.1999
(73) Patentinhaber: BASF AKTIENGESELLSCHAFT, 67056 Ludwigshafen (DE); O. Mustad & Son A/S, 2801 Gjovik (NO)
(72) Erfinder: WORF, Günther, D-67373 Dudenhofen (DE); SAALMANN, Michael, D-67112 Mutterstadt (DE); SUNDE, Svein, N-1161 Oslo (NO); THORMODSEN, Tom, N-2800 Giovik (NO)
(74) Vertreter: Isenbruck, Günter, Dr.
(86) Internationale Anmeldenummer: EP9706374
(87) Internationale Veröffentlichungsnummer: WO98023146

(56) Entgegenhaltungen:
- EP-A- 0 445 810
- EP-A- 0 514 899
- CH-A- 641 637
- US-A- 3 435 552
- DATABASE WPI Section Ch, Week 8833 Derwent Publications Ltd., London, GB; Class A86, AN 88-231464 XP002059950 & JP 63 164 832 A (ISHIDA S) , 8.Juli 1988

## Beschreibung

Die Erfindung betrifft Langleinen, aufgebaut aus mindestens einem Polyamidmonofil A) mit mindestens einem auf der Oberfläche des Polyamidmonofils befestigten zylindrischen Hohlkörper (Stopper) B), dadurch gekennzeichnet, daß der Stopper B) im wesentlichen aus einem thermoplastischen Elastomeren mit einer Shore Härte D (gemäß DIN 53 505) von mindestens 50 besteht.

Ferner betrifft die Erfindung Verfahren zur Herstellung der erfindungsgemäßen Langleinen sowie deren Verwendung zur Herstellung von Netzen, Angelleinen, Fischleinen und Endlosleinen für den Fischfang und die hierbei erhältlichen Endlosleinen, Angelleinen und Fischleinen.

Langleinen aus Stoppern und Monofilen aus Kunststoff sind aus der CH-A 641 637 und EP-A 445 810 bekannt.

Die Monofile sind aus Polyamid aufgebaut und der Stopper aus einem thermoplastischen Kunststoff, welcher auf das Monofilament entweder in zweiteiliger Form aufgeschweißt oder mit Dornen versehen durch Verschmelzen mit dem Monofil oder durch Aufspritzen mittels Spritzgußverfahren verbunden wird. die Haftung kann dabei mechanisch durch Verschmelzen und/oder chemisch (Adhäsionskräfte zwischen verschiedenen Komponenten) erfolgen.

Die Stopper dienen allgemein zur Begrenzung der Beweglichkeit von Drehwirbein oder Clipsen, an welchen sogenannte Hakenleinen und Haken angebracht sind.

Die durch die bekannten Verfahren aufgebrachten Stopper weisen -auch bei gleichem Polymermaterial von Stopper und Leine- zu geringe Haftfestigkeiten auf.

Bei kommerziell erhältlichen Systemen wurde versucht, mittels glasfaserhaltigen Stoppern die Haftfestigkeit zu verbessern.

Insbesondere für den kommerziellen Fischfang sind - da Treibnetze zunehmend nicht mehr angewendet werden dürfen - Systeme erforderlich, die eine Verschiebekraft (Abzugskraft des Stoppers) von nahezu 1000 N (und zwar im feuchten Zustand) ermöglichen. Derartige Endlosleinen sind kilometerlang und erfordern eine sehr hohe Seilzugfestigkeit. Durch Belastung mit geköderten Fischen oder Hänger am Boden sind hohe sog. Verschiebekräfte der Seilstopper und eine hohe Reißfestigkeit der Leine wünschenswert.

Weiterhin zeigen bisher im Handel erhältliche Systeme eine unbefriedigende Knotenfestigkeit des Monofils, da bei Verknoten eines Monofilamentes die Seilzugfestigkeit im Knotenbereich deutlich abnimmt.

Aufgabe der vorliegenden Erfindung war es, Langleinen zur Verfügung zu stellen, deren Stopper eine höhere Verschiebekraft im feuchten Zustand aufweisen und deren Monofilleinen eine verbesserte Knotenfestigkeit (Knoten-Höchstzugkraft) zeigen.

Demgemäß wurden die eingangs definierten Langleinen gefunden. Bevorzugte Ausführungsformen sind den Unteransprüchen zu entnehmen.

Weiterhin wurden Verfahren zur Herstellung dieser Langleinen sowie deren Verwendung zur Herstellung von Endlosleinen, Angelleinen und Fischleinen gefunden.

Das Polyamidmonofilament A) der erfindungsgemäßen Langleinen ist üblicherweise aus einem oder mehreren Polyamiden aufgebaut, welche bis zu 30 Gew.-%, vorzugsweise bis zu 15 Gew.-% (bezogen auf 100 Gew.-% Polyamid) an weiteren Zusatzstoffen und Verarbeitungshilfsmitteln enthalten können.

Der Durchmesser der Monofile beträgt im allgemeinen von 1 bis 5, insbesondere von 1,5 bis 2,5 mm.

Geeignete Polyamide für die Monofilherstellung weisen eine Viskositätszahl(VZ) von mindestens 180 ml/g, vorzugsweise mindestens 200 ml/g und insbesondere mindestens 220 ml/g auf; bestimmt in einer 0,5 gew.-%igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den US- Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthalund/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl) methan, Di-(4-aminocyclohexyl)-methan,2,2-Di-(4-aminophenyl)-propan oder 2,2-Di-(4-aminocyclohexyl)-propan.

Bevorzugte Polyamide sind Polyhexamethylenadipinsäureamid, Polyhexamethylensebacinsäureamid und Polycaprolactam.

Außerdem seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Als besonders bevorzugte Polyamide seien Copolyamide 6/66 genannt, wobei insbesondere solche bevorzugt eingesetzt werden mit einem 80:20, vorzugsweise 85:15 Verhältnis von 6/66-Einheiten (z.B. Ultramid® C der BASF AG).

Die Polyamide können weitere Zusatzstoffe und Verarbeitungshilfsmittel enthalten.

Übliche Zusatzstoffe sind beispielsweise Stabilisatoren und Oxidationsverzögerer, Mittel gegen Wärmezersetzung und Zersetzung durch ultraviolettes Licht, Gleit-und Entformungsmittel, Farbstoffe, Pigmente und Weichmacher sowie schlagzähmodifizierende Polymere (Kautschuke).

Oxidationsverzögerer und Wärmestabilisatoren, die den thermoplastischen Massen gemäß der Erfindung zugesetzt werden können, sind z.B Halogenide, ausgewählt aus der Gruppe von Metallen der Gruppe I des Periodensystems, z.B. Lithium-, Natrium-, Kalium-Halogenide, und Kupfer-(I)-Halogenide, z.B. Chloride, Bromide oder Iodide, oder Mischungen davon. Ferner kann man sterisch gehinderte Phenole, sekundäre, aromatische Amine, Hydrochinone, substituierte Vertreter dieser Gruppe und Mischungen dieser Verbindungen, vorzugsweise in Konzentration bis zu 1 Gew.-%, bezogen auf das Gewicht der Mischung, einsetzen.

Beispiele für UV-Stabilisatoren sind substituierte Resorcine, sterisch gehinderte Phenole, Salicylate, Benzotriazole und Benzophenone, die man im allgemeinen in Mengen bis zu 2 Gew.-% einsetzen kann.

Gleit-und Entformungsmittel, die man in der Regel bis zu 1 Gew.-% dem Polyamid zusetzen kann, sind, beispielsweise langkettige Fettsäuren oder deren Derivate wie Stearinsäure, Stearylalkohol, Stearinsäurealkylester und -amide sowie Ester des Pentaerythrits mit langkettigen Fettsäuren.

Weiterhin können anorganische Pigmente wie Titandioxid, Ultramarinblau, Eisenoxid und Ruß und organische Pigmente wie Phthalocyanine, Chinacridone, Perylene sowie Farbstoffe wie Nigrosin und Antrachinone als Farbmittel zugesetzt werden.

Als Keimbildungsmittel können Natriumphenylphosphinat, Aluminiumoxid, Siliziumdioxid, Nylon 22 sowie bevorzugt Talkum eingesetzt werden, üblicherweise in Mengen bis zu 1 Gew.-%.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o-und p-Tolylethylsulfonamid genannt.

Die Langleinen können auch aus mehreren Polyamidmonofilen A) aufgebaut sein,welche miteinander verknotet werden. Dies ist insbesondere für die Anwendung als Endlosleinen für den Fischfang eine bevorzugte Ausführungsform.

Der auf dem Polyamidmonofil befestigte zylindrische Hohlkörper (Stopper) B) besteht im wesentlichen aus einem thermoplastischen Elastomeren mit einer Shore Härte D (gemäß DIN 53 505) von mindestens 50, vorzugsweise mindestens 60 und insbesondere mindestens 70.

Bevorzugte thermoplastische Elastomere sind thermoplastische Polyurethane (TPU), vorzugsweise (Polyether)-polyurethane. Ganz besonders bevorzugt sind TPU's auf Basis Polytetrahydrofuran (PTHF) mit einem mittleren Molekulargewicht (Mₙ) von 200 bis 3000, vorzugsweise 1000 bis 2000 als Polyetherolbestandteile des TPU's.

Geeignete TPU's können beispielsweise hergestellt werden durch Umsetzung von
a) organischen, vorzugsweise aromatischen Diisocyanaten,
b) Polyhydroxylverbindungen mit Molekulargewichten von 500 bis 8000 und
c) Kettenverlängerungsmitteln mit Molekulargewichten von 60 bis 400 in Gegenwart von gegebenenfalls
d) Katalysatoren,
e) Hilfsmitteln und/oder Zusatzstoffen.

Zu den hierfür verwendbaren Ausgangsstoffen(a) bis (c), Katalysatoren(d), Hilfsmitteln und Zusatzstoffen(e) möchten wir folgendes ausführen:
a) Als organische Diisocyanate(a) kommen beispielsweise aliphatische, cycloaliphatische und vorzugsweise aromatische Diisocyanate in Betracht. Im einzelnen seien beispielhaft genannt: aliphatische Diisocyanate, wie Hexamethylen-diisocyanat, cycloaliphatische Diisocyanate, wie Isophoron-diisocyanat, 1,4-Cyclohexan-diisocyanat, 1-Methyl-2,4- und -2,6-cyclohexandiisocyanatsowie die entsprechenden Isomerengemische, 4,4'-,2,4'- und 2,2'-Dicyclohexylmethan-diisocyanat sowie die entsprechenden Isomerengemische und vorzugsweise aromatische Diisocyanate, wie 2,4-Toluylendiisocyanat, Gemische aus 2,4- und2,6--Toluylen-diisocyanat, 4,4'-, 2,4'und 2,2'-Diphenylmethan-diisocyanat. Gemische aus 2,4'- und 4,4'-Diphenylmethan-diisocyanat, urethanmodifizierte flüssige 4,4'-und/oder 2,4'-Diphenylmethan-diisocyanate, 4,4'-Diiso-cyanato-diphenylethan-(1,2) und 1,5-Naphthylendiisocyanat. Vorzugsweiseverwendet werden Hexamethylen-diisocyanat, Isophoron-diisocyanat, 1,5-Naphthylen-diisocyanat, Diphenylmethandiisocyanat-Isomerengemische mit einem 4,4'-Diphenylmethan-diisocyanatgehalt von größer als 96 Gew.-% und insbesondere 4,4'-Diphenylmethandiisocyanat.
b) Als höhermolekulare Polyhydroxylverbindungen(b) mit Molekulargewichten von 500 bis 8000 eignen sich vorzugsweise Polyetherole und Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung, mit den obengenannten Molekulargewichten. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder inForm von Mischungen zur Anwendung kommen.
   Geeignete Polyetherole können dadurch hergestellt werden, daß man ein oder mehrere Alkylenoxide mit 2 bis 4Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole, wie N-Alkyl-diethanolamine, beispielsweise N-methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans (Polyoxytetramethylenglykole).
   Vorzugsweise verwendet werden Polyetherole aus Propylenoxid-1,2 und Ethylenoxid, in denen mehr als 50%, vorzugsweise 60 bis 80% der OH-Gruppen primäre Hydroxylgruppen sind und bei denen zumindest ein Teil des Ethylenoxids als endständiger Block angeordnet ist; z.B. insbesondere Polyoxytetramethylenglykole.
   Solche Polyetherole können erhalten werden, indem man z.B. an das Startermolekül zunächst das Propylenoxid-1,2 und daran anschließend das Ethylenoxid polymerisiert oder zunächst dasgesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 unddann den Rest des Ethylenoxids, an das Startermolekül anpolymerisiert.
   Die im wesentlichen linearen Polyetherole besitzen Molekulargewichte von 500 bis 8000, vorzugsweise 600 bis 6000 und insbesondere 800 bis 3500. Sie können sowohl einzeln als auch in Form von Mischungen untereinander zu Anwendung kommen.
   Geeignete Polyesterole können beispielsweise aus Dicarbonsäuren mit 2 bis 12 Kohlenstoffatomen, vorzugsweise 4 bis 8 Kohlenstoffatomen und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung verwendet werden. Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis4 Kohlenstoffatomen im Alkoholrest, Dicarbonsäureanhydride oder Dicarbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischungen untereinander verwendet werden.
   Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von w-Hydroxycarbonsäuren, beispielsweise w-Hydroxycapronsäure und vorzugsweise Polymerisationsprodukte von Lactonen, beispielsweise gegebenenfalls substituierten w-Caprolactonen.
   Als Polyesterole vorzugsweise verwendet werden Dialkylenglykol-polyadipate mit 2 bis 6 Kohlenstoffatomen im Alkylenrest, wie z.B. Ethandiolpolyadipate, 1,4-Butandiol-polyadipate, Ethandiol-butandiol-1,4-polyadipate, 1,6-Hexandiol-neopentylglykol-polyadipate, Polycaprolactone und insbesondere 1,6-Hexandiol-1,4-butandiol-polyadipate.
   Die Polyesterole besitzen Molekulargewichte von 500 bis 6000, vorzugsweise von 800 bis 3500.
c) Als Kettenverlängerungsmittel(c) mit Molekulargewichten von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di-(β-hydroxyethyl)-hydrochinon, (cyclo)aliphatische Diamine, wie z.B. 4,4'-Diamino-dicyclohexylmethan,3,3'-Dimethyl-4,4'-diamino-dicyclohexylmethan, Isophoron-diamin, Ethylendiamin, 1,2-, 1,3-Propylen-diamin, N-Methyl-propylendiamin-1,3, N,N'-Dimethyl-ethylendiamin und aromatische Diamine, wie z.B. 2,4- und 2,6-Toluylen-diamin, 3,5-Diethyl-2,4- und -2,6-toluylen-diamin und primäre ortho-di-, tri- und/oder tetraalkylsubstituierte 4,4'-Diamino-diphenylmethane.
   Zur Einstellung von Härte und Schmelzpunkt der TPU können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln(c) von 1:1 bis 1:12, insbesondere von 1:1,8 bis 1:6,4, wobei die Härte und der Schmelzpunkt der TPU mit zunehmendem Gehalt an Diolen ansteigt.
   Zur Herstellung der TPU werden die Aufbaukomponenten (a), (b) und (c) in Gegenwart von gegebenenfalls Katalysatoren (d), Hilfsmitteln und/oder Zusatzstoffen(e) in solchen Mengen zurReaktion gebracht, daß das äquivalenzverhältnis von NCO-Gruppen der Diisocyanate(a) zur Summe der Hydroxylgruppen oder Hydroxyl- und Aminogruppen der Komponenten (b) und (c) 1:0,85 bis 1:1,20, vorzugsweise 1:0,95 bis 1:1,05 und insbesondere 1:0,98 bis 1:1,02 beträgt.
d) Geeignete Katalysatoren, welche insbesondere die Reaktion zwischen den NCO-Gruppen der Diisocyanate(a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)acetyl-acetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Teilen pro 100 Teile Polyhydroxylverbindung(b) eingesetzt.

Neben Katalysatoren können den Aufbaukomponenten (a) bis (c) auch Hilfsmittel und/oder Zusatzstoffe (e) einverleibt werden u.z. in Mengen bis zu 40, vorzugsweise bis zu 20 Gew.-%, bezogen auf 100% thermoplastisches Elastomer. Genannt seien beispielsweise Gleitmittel, Inhibitoren, Stabilisatoren gegen Hydrolyse, Licht, Hitze oder Verfärbung, Farbstoffe, Pigmente, anorganische und/oder organische Füllstoffe und Weichmacher.

Nähere Angaben über die obengenannten Hilfsmittel- und Zusatzstoffe sind der Fachliteratur, beispielsweise der Monographie von J.H.Saunders und K.C.Frisch "High Polymers", Band XVI, Polyurethane, Teil 1 und 2, Verlag Interscience Publishers 1962 bzw. 1964 oder der DE-AS 29 01 774 zu entnehmen.

Für die Stopper B) der erfmdungsgemäßen Langleinen eignen sich insbesondere solche TPU's, welche bis zu 25, vorzugsweise bis zu 15 Gew.-% eines faserförmigen Füllstoffes, bevorzugt Glasfasern enthalten.

Geeignete Produkte sind im Handel erhältlich unter der Handelsbezeichnung Elastollan® 1174D, Elastollan® R3000 und Elastollan® R3001 der Elastogran GmbH, DE.

Für eine bessere Biegefestigkeit kann der Stopper B) mit wenigstens einer radialen Einschnürung versehen sein. Vorzugsweise weist dieser wenigstens 3 und insbesondere 5 radiale Einschnürungen auf. Im allgemeinen beträgt der Außendurchmesser von 3 bis 10 mm, vorzugsweise von 6 bis 8 mm. Die Länge des Stoppers auf dem Monofilament beträgt üblicherweise von 10 bis 80 mm, vorzugsweise von 20 bis 30 mm.

Der Abstand der Stopper auf dem Monofil ist im allgemeinen nicht kritisch und richtet sich im wesentlichen nach der gewünschten Verwendung. Beispielsweise können 2 Stopper einen Clips mit zugehöriger Hakenleine fest umschließen, wobei zu beachten ist, daß der Abstand zu den beiden nächstgelegenen Stoppern samt Clips und Hakenleine so groß ist, daß sich die Hakenleinen nicht miteinander verhaken können. In einer anderen Ausführungsform der Langleinen können die Clipse samt Hakenleine durch einzelne Stopper in ihrer Beweglichkeit entlang der Leine begrenzt werden.

Der um die Langleine frei drehbare Clips kann dadurch auch entlang der Längsrichtung bewegt werden (z.B. vom Fisch). In einer weiteren Ausführungsform ist es auch möglich, Clipse (samt Hakenleinen) auf den Stoppern selbst aufzubringen. Derartige Clipse sind frei drehbar um die Leine, jedoch nicht in Längsrichtung der Leine bewegungsfähig.

Ferner wurden Verfahren zur Herstellung von Langleinen gefunden, welche dadurch gekennzeichnet sind, daß man
a) eine Polyamidschmelze durch eine Düse extrudiert, wobei Polyamidmonofile gebildet werden und
b) die so hergestellten Monofile abkühlt,
c) die Monofile in mindestens einem weiteren Verfahrensschritt in der Längsrichtung verstreckt,
d) die Monofile relaxiert und anschließend
e) die Stopper B) auf dem Monofil befestigt.

Im allgemeinen werden die vorstehend genannten Polyamide mit gegebenenfalls weiteren Zusatzstoffen als Granulat in geeignete Vorrichtungen wie z.B. Extruder gegeben und zu einer homogenen Schmelze verarbeitet und durch eine Düse extrudiert, so daß ein Monofil gebildet wird.

Die Kühlung der extrudierten Monofile kann ein- oder mehrstufig erfolgen, indem man Monofile durch ein oder mehrere aneinandergereihte Wasserbäder führt.

Das Kühlwasser in diesen Bädern wird üblicherweise so reguliert und/oder umgewälzt, daß Temperaturen von 10 bis 20, vorzugsweise von 15 bis 25°C erzielt werden.

Anschließend werden die Monofile in mindestens einem weiteren Verfahrensschritt in der Längsrichtung verstreckt. Vorzugsweise wird zur Verbesserung der Haftung des Stoppers der Monofilquerschnitt vor der Verstreckung mit geeigneten Vorrichtungen (z.B. Stempelprägestation) abgeplattet, vorzugsweise an der Position des Stoppers auf der Langleine und über die gewünschte Länge, welche der Stopper auf der Leine anschließend aufweisen sollte.

Der Verfahrensschritt C) wird in einer bevorzugten Ausführungsform in mindestens 2 Stufen durchgeführt, wobei mindestens eine Verstreckung in Wasserdampf bei Temperaturen von 95 bis 105, vorzugsweise von 100 bis 102°C und mindestens eine weitere Verstreckung in Heißluft bei Temperaturen von 240 bis 330, vorzugsweise von 270 bis 310°C durchgeführt wird.

Die Monofile werden hierzu z.B. über Walzen geführt, welche eine unterschiedliche Umlauf-Geschwindigkeit aufweisen, so daß die Monofile insgesamt maximal um den Faktor 7, vorzugsweise maximal 6,3 verstreckt werden.

Bei der bevorzugten zweistufigen Ausführungsform erfolgt die Verstreckung in Wasserdampf um den Faktor 3,2 bis 4,2 und anschließend bei Heißluft um den Faktor 1,24 bis 1,82; insgesamt für beide Stufen von 5,2 bis 5,8.

Diese bevorzugte Verstreckung führt insbesondere zu einer Erhöhung der Knotenfestigkeit der Monofile. Anschließend werden die Monofile zur Relaxierung über Walzen geführt, deren Umlauf-Geschwindigkeit um den Faktor 0,90 bis 0,98, vorzugsweise 0,93 bis 0,96 langsamer ist als die der zur Verstreckung benötigten Walzen.

Die Relaxierung dient im allgemeinen zur Stabilisierung und Fixierung der bei der Verstreckung erreichten Monofileigenschaften und wird allgemein bei Temperaturen von 140 bis 220, vorzugsweise von 160 bis 190°C durchgeführt.

Auf die Monofile bringt man anschließend mittels geeigneter Verfahren z.B. Aufschweißen oder Spritzgußverfahren die Stopper B) auf (s. z.B. NO-A 87/0531).

Um die Haftfestigkeit des Stoppers auf der Monofiloberfläche zu verbessern, kann diese bevorzugt vorbehandelt werden, wobei insbesondere eine Vorbehandlung mittels des Koronaverfahrens erfolgen kann.

Der Korona-Oberflächeneffekt beruht auf der Bombardierung der Polymeroberfläche mit Elektronen. Diese verlassen die Elektrode und werden unter dem Einfluß der Hochspannung in Richtung auf die durchlaufende Bahn beschleunigt. Dabei stoßen sie mit Luftmolekülen zusammen, die ihrerseits Licht aussenden und teilweise zu Ozon und Stickoxiden reagieren. Wenn die Elektronen auf das Polymer treffen, haben sie soviel Energie, daß sie die Bindung z.B. zwischen Kohlenstoff und Wasserstoff bzw. zwischen zwei Kohlenstoff-Atomen aufbrechen können. An den freien Valenzen (Radikale) finden dann Reaktionen mit dem Korona-Gas statt, überwiegend Oxidationen.

Die gebildeten funktionalen Gruppen sind polar und damit die Grundlage für die Haftung z.B. aufgetragener Druckfarben, Lacke etc.

Die beste Effektivität wird erreicht, wenn die Entladung möglichst gleichmäßig und bei "sanften" Funken der Entladestrom möglichst hoch ist. Der Entladestrom hängt von der Generatorleistung und von der elektrischen Abstimmung von Generator, Hochspannungstransformator, Elektrode und Gegenelektrode ab. Das "sanfte" und homogene Funkenbild wird von der konstruktiven Gestaltung der Elektrode und der Arbeitsfrequenz des Generators bestimmt.

In einer besonders bevorzugten Ausführungsform kann die Vorbehandlung durch z.B. Durchführen des Monofils durch ein Hochspannungsfeld erfolgen, wobei die Monofiloberfläche über Mehrpunktelektroden statisch teilweise aufgeladen wird.

Die erfindungsgemäßen Langleinen eignen sich zur Herstellung von Angelleinen, Fischleinen und insbesondere Endlosleinen für den Fischfang. Vorrichtungen und Verfahren zur Befestigung der Clipse samt Mundleine (sogenannte Hooklines) sind z.B. aus der EP-A 537 193, US 4,407,087 sowie technischen Firmenschriften der Firma Mustad & Søn, Norwegen zu entnehmen.

### Beispiele

### I. Monofilherstellung

Aus einem Polyamidgranulat aufgebaut aus einem Copolyamid mit 85 Gew.-% P A6 und 15 Gew.-% PA 66-Einheiten (Ultramid® C4 der BASF AG) mit einer Viskositätszahl (VZ) von 250ml/g (gemessen an einer 0,5gew.-%igen Lösung in 96 gew.-%iger H₂SO₄ bei 25°C gemäß ISO307) wurde eine Schmelze bei 280°C in einem Extruder hergestellt, bei 285°C ausgetragen und durch ein Wasserbad mit 19°C gekühlt. Die Verstreckung wurde in einer 1.Stufe im Wasserdampf (100°C) auf einen Faktor von 4,1 und anschließend in Heißluft bei 305°C auf einen Faktor insgesamt von 5,4 durchgeführt. Durch anschließende Relaxierung bei 185°C wurde das Monofil rückgeschrumpft, so daß nach Relaxierung eine Verstreckung um den Faktor 5,1 vorlag.

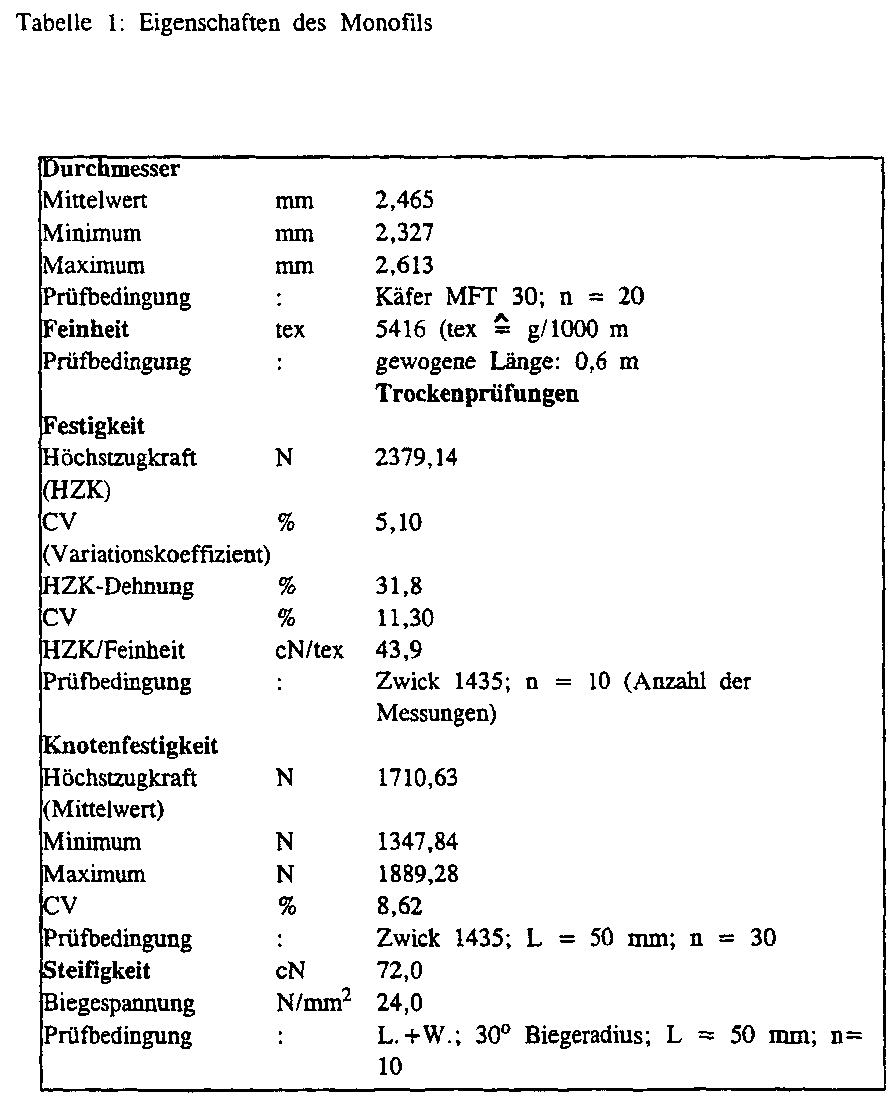

### II. Stopper

Es wurden folgende Zusammensetzungen eingesetzt.
1. zum Vergleich
   Polyamid 66 mit VZ von 150 ml/g enthaltend 20 Gew.-% eines Ethylen/Acrylsäure/n-Butylacrylat/Maleinsäureanhydrid-Copolymeren (60/4,3/35/0,7) als Schlagzähmodifier (Ultramid® A3Z der BASF AG)
2. zum Vergleich
   Polyamid 66 mit VZ von 150 ml/g enthaltend 1 Gew.-% Ruß, 8 Gew.-% des Schlagzähmodifiers wie unter 1. und 40 Gew.-% Glasfasern (Ultramid® A3ZG8 der BASF AG)
3. zum Vergleich
   Polyamid 6 mit VZ von 140 ml/g enthaltend 30 Gew.-% Glasfasern (Ultramid® BEG6 der BASF AG)
4. Ein thermoplastisches Polyurethan (TPU) aus
   Polytetrahydrofuran (Mₙ: 1000) (Polyetherol),
   4,4'-Diphenylmethandiisocyanat (MDI),
   1,4 Butandiol
   (Elastollan® 1174D der Elastogran GmbH)
   Shore Härte D (gemäß DIN 53 505):50
5. TPU aus
   Hexandiol-Butandiol-Adipat,
   MDI,
   1,4-Butandiol
   mit 0,3 Gew.-% Stabaxol® (Stabilisator auf Basis eines aromatischen Carbodiimids)
   und
   20 Gew.-% Glasfasern
   (Elastollan® R3000 der Elastogran GmbH)
   Shore Härte D: 73
6. TPU aus
   65 Gew.-% TPU aus
   a) Butandiol-Adipat,
      Polytetrahydrofuran (Mₙ: 1000)
      Polytetrahydrofuran (Mₙ: 2000)
      MDI
      Butandiol
      in Mischung mit
      19 Gew.-% TPU aus
   b) Polytetrahydrofuran (Mₙ: 1000)
      MDI
      Butandiol
      stabilisiert mit 0,2 Gew.-% Irganox® 1010 (CibaGeigy AG)
      1 Gew.-% Ruß
      15 Gew.-% Glasfasern
      (Elastollan® R3001 der Elastogran GmbH)
      Shore Härte D: 75

### III. Herstellung der Langleinen

Die Stopper 1 bis 6 wurden auf das Monofil im mittels Spritzgußverfahren aufgebracht. Die Massetemperaturen sind der Tabelle zu entnehmen.

Die Anzahl der radialen Einschnürungen betrug: 5

Länge des Stoppers: 30 mm

Durchmesser (äußerer) des Stoppers: 7 mm

### IV. Vorbehandlung der Monofile

Typ 1: Korona-Vorbehandlung durch Fa. Softal, Hamburg
   Korona-Vorbehandlung über zwei Keramik-Elektroden mit Abmessungen 12x16x100mm
   angelegte Spannung: 10 kV
   Abstand Monofil-Elektrode 0,6 mm
   Abzugsgeschwindigkeit 1 m/min
Typ 2: Vorbehandlung auf Trägerwalze (Korona-Anlage für Folien, der Fa.Softal, Hamburg)
   Messerelektrode mit 11 Stahlmessern
   Walzendurchmesser: 255 mm
   angelegte Spannung: 1 kV
   Abstand Messerelektrode Monofil: 2 mm
   Walzenumfangsgeschwindigkeit: 40 m/min
   durchgeführte Walzenumdrehungen: 2x3 (beidseitige Behandlung der Monofile)
Typ 3: Vorbehandlung über Hochspannungsgenerator KNH 34 der Fa.Eltex, Weil a.Rhein
Prinzip: partielle Aufladung der Monofiloberfläche über Dreipunktelektrode
   angelegte Spannung über Generator: 20 kV
   Abstand Elektrode - Monofil 50-70 mm
   Behandlungszeit 2x3 s (beidseitiges Vorbeiführen des Monofiles)
   Die Abzugskraft des Stoppers [N] wurde gemäß den nachstehenden Angaben in der Tabelle
   a) nach Luftlagerung bei Raumtemperatur
   b) nach Wasserlagerung (24h) bei Raumtemperatur und
   c) mit oder ohne Vorbehandlung des Monofils
   durchgeführt.

Die Abzugskraft wurde gemessen an einer Zwick 1435 Reißmaschine, wobei die Langleine mit einer Klemme eingespannt und befestigt wurde. Der Stopper wurde oberhalb der Walze durch einen Metallbolzen mit einer runden Bohrung geführt, so daß der Stopper auf dem Bolzen aufliegt. Anschließend wird der Bolzen nach oben geführt und die Abzugskraft gemessen, bis der Stopper sich vom Monofil löst.

Die Ergebnisse der Messungen sind der Tabelle 2 zu entnehmen.

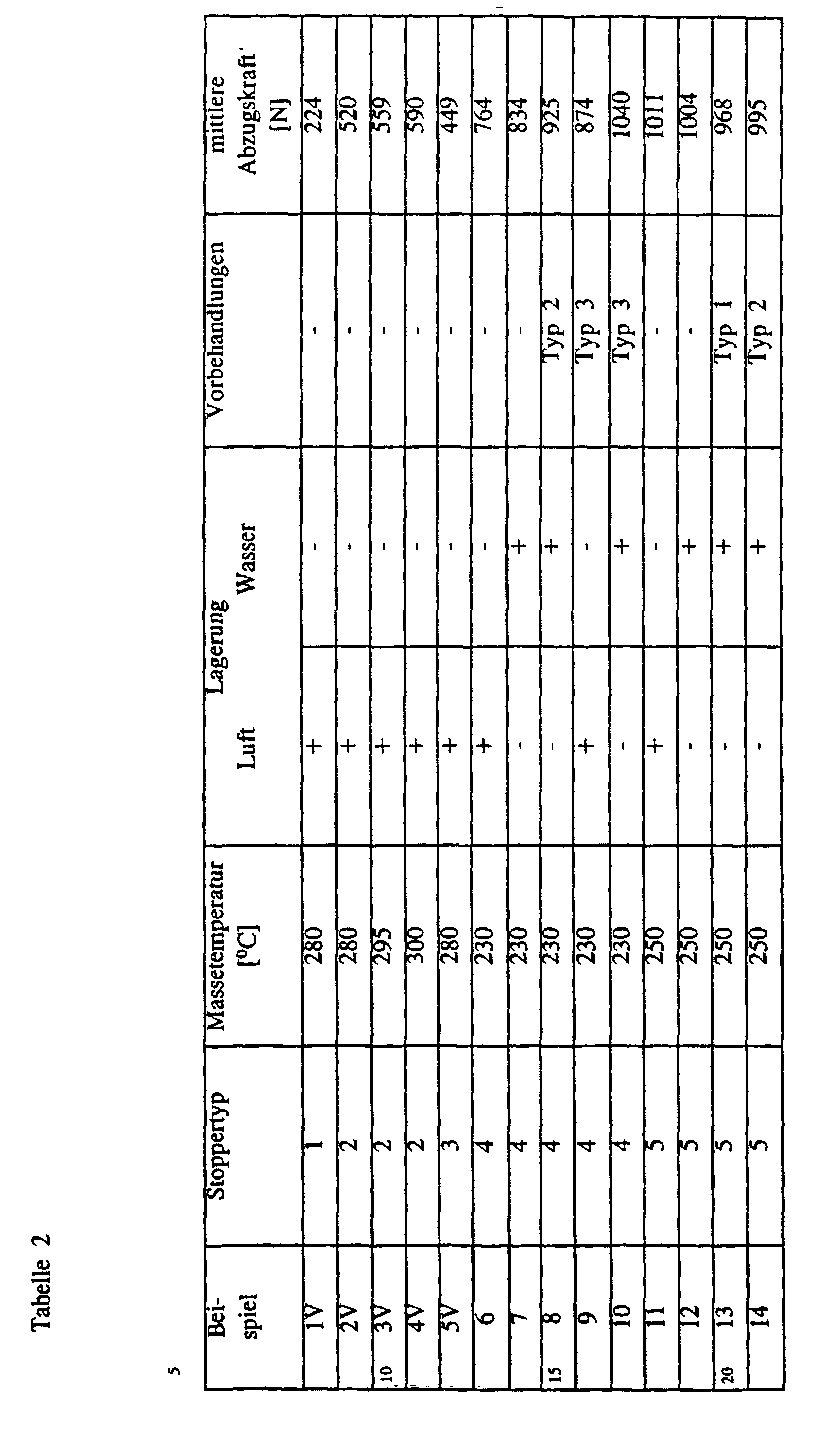

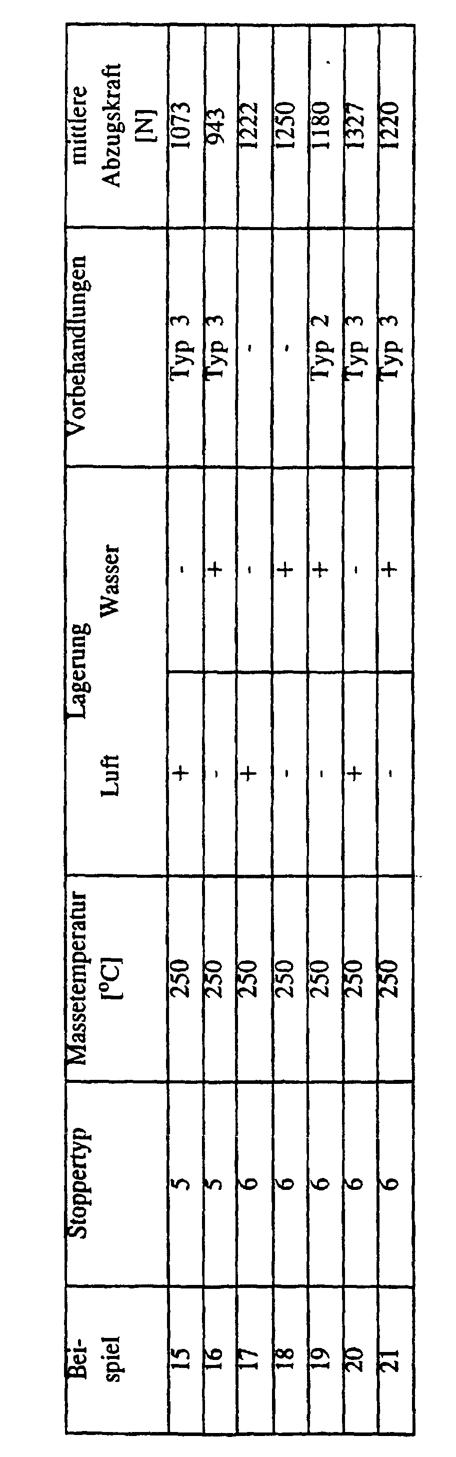

## Patentansprüche

1. Langleine, aufgebaut aus mindestens einem Polyamidmonofil A) mit mindestens einem auf der Oberfläche des Polyamidmonofils befestigten zylindrischen Hohlkorper (Stopper) B), **dadurch gekennzeichnet, daß** der Stopper B) im wesentlichen aus einem thermoplastischen Elastomeren mit einer Shore Härte D (gemäß DIN 53 505) von mindestens 50 besteht.

2. Langleine nach Anspruch 1, **dadurch gekennzeichnet, daß** die Außenfläche des Stoppers mit wenigstens einer radialen Einschnürung versehen ist.

3. Langleine nach Anspruch 1 und 2, **dadurch gekennzeichnet, daß** das thermoplastische Elastomer eine Shore Härte D von mindestens 70 aufweist.

4. Langleine nach den Ansprüchen 1 bis 3, **dadurch gekennzeichnet, daß** das thermoplastische Elastomer bis zu 40 Gew.-% weiterer Zusatzstoffe und Verarbeitungshilfsmittel enthält.

5. Langleine nach den Ansprüchen 1 bis 4, **dadurch gekennzeichnet, daß** das thermoplastische Elastomer im wesentlichen aus einem thermoplastischen Polyurethan besteht.

6. Langleine nach den Ansprüchen 1 bis 5, **dadurch gekennzeichnet, daß** das Polyamid des Monofils A) eine Viskositätszahl von mindestens 180 ml/g aufweist.

7. Langleine nach den Ansprüchen 1 bis 6, **dadurch gekennzeichnet, daß** das Polyamid des Monofils A) aus PA6 oder einem Copolyamid 6/66 oder deren Mischungen aufgebaut ist.

8. Verfahren zur Herstellung von Langleinen gemäß den Ansprüchen 1 bis 7, **dadurch gekennzeichnet, daß** man
a) eine Polyamidschmelze durch eine Düse extrudiert, wobei Polyamidmonofile gebildet werden und
b) die so hergestellten Monofile abkühlt,
c) die Monofile in mindestens einem weiteren Verfahrensschritt in der Längsrichtung verstreckt,
d) die Monofile relaxiert und anschließend
e) die Stopper B) auf dem Monofil befestigt.

9. Verwendung der Langleinen gemäß den Ansprüchen 1 bis 7 oder erhältlich gemäß dem Verfahrensanspruch 8 zur Herstellung von Netzen, Angelleinen, Fischleinen und Endlosleinen für den Fischfang.

10. Netze, Angelleinen, Fischleinen und Endlosleinen für den Fischfang, erhältlich aus den Langleinen gemäß den Ansprüchen 1 bis 7 oder gemäß den Verfahrensbedingungen des Anspruches 8.

## Claims

1. A longline comprising at least one polyamide monofil A) with at least one cylindrical hollow body (stopper) B) secured on the polyamide monofil surface, wherein said stopper B) consists essentially of a thermoplastic elastomer having a Shore D hardness (as defined in DIN 53 505) of at least 50.

2. A longline as claimed in claim 1, wherein the outer surface of the stopper is provided with at least one radial constriction.

3. A longline as claimed in claim 1 or 2, wherein the thermoplastic elastomer has a Shore D hardness of at least 70.

4. A longline as claimed in any of claims 1 to 3, wherein the thermoplastic elastomer includes up to 40% by weight of further, additive substances and processing aids.

5. A longline as claimed in any of claims 1 to 4, wherein the thermoplastic elastomer consists essentially of a thermoplastic polyurethane.

6. A longline as claimed in any of claims 1 to 5, wherein the polyamide of said monofil A) has a viscosity number of at least 180 ml/g.

7. A longline as claimed in any of claims 1 to 6, wherein the polyamide of said monofil A) comprises PA 6 or 6/66 copolyamide or mixtures thereof.

8. A process for manufacturing a longline as claimed in any of claims 1 to 7, which comprises
a) extruding a polyamide melt through a die to form a polyamide monofil,
b) cooling the monofil,
c) drawing the monofil in the longitudinal direction in at least one further step,
d) relaxing the monofil, and then
e) securing said stoppers b) on the monofil.

9. The use of the longlines of claims 1 to 7 or obtainable as per process claim 8 for manufacturing nets, angling lines, fishlines and continuous lines for catching fish.

10. Nets, angling lines, fishlines and continuous lines for catching fish, obtainable from the longlines of claims 1 to 7 or as per the process conditions of claim 8.

## Revendications

1. Lignes constituées d'au moins un monofil de polyamide A) comportant au moins un corps creux cylindrique (stoppeur) B) fixé à la surface du monofil de polyamide, **caractérisées en ce que** le stoppeur B) est constitué essentiellement d'un élastomère thermoplastique présentant une dureté Shore D (selon la norme DIN 53 505) d'au moins 50.

2. Lignes suivant la revendication 1, **caractérisées en ce que** la surface externe du stoppeur est pourvue d'au moins un rétrécissement radial.

3. Lignes suivant l'une des revendications 1 et 2, **caractérisées en ce que** l'élastomère thermoplastique présente une dureté Shore D d'au moins 70.

4. Lignes suivant l'une des revendications 1 à 3, **caractérisées en ce que** l'élastomère thermoplastique contient jusqu'à 40% en poids d'autres additifs et agents auxiliaires de traitement.

5. Lignes suivant l'une des revendications 1 à 4, **caractérisées en ce que** l'élastomère thermoplastique est constitué essentiellement d'un polyuréthanne thermoplastique.

6. Lignes suivant l'une des revendications 1 à 5, **caractérisées en ce que** le polyamide du monofil A) présente un indice de viscosité d'au moins 180 ml/g.

7. Lignes suivant l'une des revendications 1 à 6, **caractérisées en ce que** le polyamide du monofil A) est constitué de PA6 ou d'un copolyamide 6/66 ou de leurs mélanges.

8. Procédé de fabrication de lignes suivant l'une des revendications 1 à 7, **caractérisé** en que
a) on extrude une masse fondue de polyamide au travers d'une filière, des monofils de polyamide étant formés, et
b) on refroidit les monofils ainsi préparés,
c) on étire les monofils dans la direction longitudinale dans au moins une étape de procédé ultérieure,
d) on relâche les monofils et ensuite
e) on fixe le stoppeur B) sur le monofil.

9. Utilisation des lignes suivant l'une des revendications 1 à 7 ou que l'on peut obtenir suivant le procédé de la revendication 8, pour la fabrication de filets, de lignes à hameçon, de lignes de pêche et de lignes sans fin pour la pêche.

10. Filets, lignes à hameçon, lignes de pêche et lignes sans fin pour la pêche, que l'on peut obtenir à partir des lignes suivant l'une des revendications 1 à 7 ou conformément aux conditions du procédé de la revendication 8.
